# EUROPÄISCHE PATENTSCHRIFT

(11) **EP 0 795 455 B1**
(45) Veröffentlichungstag und Bekanntmachung des Hinweises auf die Patenterteilung: **03.11.1999**
(21) Anmeldenummer: 97250070.6
(22) Anmeldetag: 12.03.1997
(51) Int. Cl.: B61L 25/02, B61L 3/00

(54) **Verfahren zur Eigenortung eines spurgeführten Fahrzeugs und Einrichtung zur Durchführung des Verfahrens**
Method for determining the position of a railborne vehicle and device for carrying out the method
Procédé de détermination de position d'un véhicule guidé sur rails et dispositif de mise en oeuvre du procédé

(30) Priorität: 14.03.1996 DE 19611774
(43) Veröffentlichungstag der Anmeldung: 17.09.1997
(73) Patentinhaber: SIEMENS AKTIENGESELLSCHAFT, 80333 München (DE)
(72) Erfinder: Klinge, Karl-Albrecht, 38114 Braunschweig (DE)

(56) Entgegenhaltungen:
- EP-A- 0 561 705
- DE-A- 19 505 487
- DE-A- 19 529 986

## Beschreibung

Die Erfindung bezieht sich auf ein Verfahren nach dem Oberbegriff des Patentanspruches 1 sowie auf eine Einrichtung zur Durchführung dieses Verfahrens.

Ein solches Verfahren und eine solche Einrichtung sind aus EP-A 0 561 705 bekannt.

In der nicht vorveröffentlichten deutschen Patentanmeldung 195 29 986 werden des eben genannte Verfahren und die eben genannte Einrichtung ebenfalls beschrieben. Dort stellen die eine Strecke befahrenden Fahrzeuge ihren jeweiligen Fahrort dadurch fest, daß sie ein von ihnen detektiertes aktuelles Streckenbild mit einer Referenzstreckenabbildung korrelieren, für die in einem Streckenatlas Streckenpositionen hinterlegt sind. Die Strekkenabbildung soll aus einer Radar-, Infrarot- oder Videoabbildung der Strecke bestehen. Die Referenzabbildung, mit der die aktuelle Streckenabbbildung zu korrelieren ist, wurde bei einer früheren Fahrt des Fahrzeugs oder eines Fahrzeugs des gleichen Fahrzeugtypes auf gleiche Weise aufgenommen wie das aktuelle Streckenabbild und zusammen mit der Streckenkilometrierung in einem Speicher hinterlegt.

Die für einen bestimmten Fahrort geltende Streckenabbildung ist mindestens jahreszeitlichen und witterungsbedingten Änderungen unterworfen, d. h. das Streckenpanorama unterscheidet sich im Winter insbesondere nach Schneefall stark von dem entsprechenden Sommerpanorama und auch die Begrünung von Büschen und Bäumen im Frühling und Sommer ergibt ein unterschiedliches Panorama gegenüber entlaubten oder teilentlaubten Büschen und Bäumen im Herbst und im Winter. Darüber hinaus verändern bauliche Tätigkeiten entlang der Strecke das Streckenpanorama und erschweren die Fahrzeugortung.

Aus der DE 32 05 314 C2 ist eine Einrichtung zur Eigenortung eines spurqeführten Objektes auf einer Strecke bekannt, die mit einem in regelmäßigen Abständen gekreuzten Linienleiter für die drahtlosen Informationsübertragungen von der Strecke auf den Zug versehen ist. Fahrzeugseitige Empfangsspulen detektieren die Phasenlage der Empfangsspannungen im jeweils befahrenen Linienleiterabschnitt und bewerten sie. Durch Zählen der passierten Linienleiterkreuzungsstellen kann das Fahrzeug feststellen, wo es sich auf der Strecke befindet; für die Feinortung innerhalb der einzelnen Linienleiterabschnitte werden auf den Fahrzeugen zusätzliche, z. B. von einer nicht angetriebenen Fahrzeugwelle gesteuerte Wegmeßeinrichtungen benötigt. Diese bekannte Einrichtung zur Eigenortung eines spurgeführten Objektes benötigt zwingend den im Gleis verlegten Linienleiter und ist daher recht aufwendig.

Aus der US-PS 5,129,605 ist ein fahrzeugseitiges Ortungssystem für Schienenfahrzeuge bekannt, das die jeweilige Fahrzeugposition durch Laufzeitbewertung von Satellitensignalen bestimmt. Ein solches auf Satellitennavigation beruhendes Ortungssystem hat den Nachteil, daß es in Abschattungsbereichen, insbesondere Tunnels und überdachten Bahnhöfen, keine brauchbaren Ortungsangaben liefert. Außerdem besteht immer die Gefahr, daß die für die Satellitennavigation verwendeten Satelliten aus militärischen Gründen vorübergehend oder langfristig nicht für die private Nutzung zur Verfügung gestellt werden, so daß das Ortungssystem dann vollständig ausfällt.

Aus der DE 29 42 933 A1 ist eine Vorrichtung zur Weg- und Geschwindigkeitsmessung schienengebundener Fahrzeuge bekannt, bei der eine fahrzeugseitige Radareinrichtung eine in Fahrrichtung schräg zum Boden gerichtete Radarantenne aufweist, die einen schmalen Bereich zwischen den Gleisen ausleuchtet. Das am Gleisbett reflektierte Signal wird auf dem Fahrzeug empfangen und bezüglich der die Information über die Momentangeschwindigkeit des Fahrzeugs enthaltenden Dopplerverschiebung ausgewertet. Aus der Fahrgeschwindigkeit läßt sich auf dem Fahrzeug auch der zurückgelegte Fahrweg und damit der jeweilige Fahrort errechnen, allerdings nur solange die Radarsendesignale vom Schotter oder sonstigen reflektierenden Materialien im Gleisbett in ausreichendem Maße zurückgeworfen werden. Das ist bei Schnee und Eis nicht der Fall, so daß die Ortungseinrichtung dann versagt oder zumindest unzuverlässig arbeitet.

Für die fahrzeugseitige Geschwindigkeitsbestimmung von Bahnfahrzeugen ist es bekannt (Hasler Mitteilungen, 34. Jahrgang, Nr. 2, Juni 1975, Seiten 33 bis 47), vom Fahrzeug aus die Lauffläche einer Fahrschiene mittels zweier in Fahrrichtung beabstandeter Optiken abzutasten und die Zeitverschiebung zwischen dem Auftreten übereinstimmender Abbildungen an den beiden Optiken zu messen. Aus dem Abstand der beiden Optiken und der Zeitverschiebung der korrelierten Abbildungen ergibt sich die Vorrückgeschwindigkeit des Fahrzeugs. Eine Eigenortung des Fahrzeugs auf der Strecke ist mit der bekannten Einrichtung nicht möglich.

Aufgabe der Erfindung ist es, ein Verfahren nach dem Oberbegriff des Patentanspruches 1 sowie eine Einrichtung zur Durchführung des Verfahrens anzugeben, das überall auf der Strecke eine hinreichend genaue Lokalisierung eines Fahrzeugs zuläßt und hierzu ohne gleisseitige Zusatzeinrichtungen wie Linienleiter und Ortsbaken auskommt.

Die Erfindung löst diese Aufgabe durch die kennzeichnenden Merkmale des Patentanspruches 1 bzw. des Patentanspruches 3. Die für die Eigenortung verwendeten Ortungsverfahren, nämlich die Satellitennavigation und die Radarsignalabbildung des Gleisbettes, ergänzen sich in vorteilhafter Weise. Auf freier Strecke, wo die Radarortung z. B. durch Eis und Schnee behindert sein kann, kommt die Satellitennavigation zur Anwendung und in Abschattungsbereichen wo die Satellitennavigation keine zuverlässigen Ortungsergebnisse liefert, liefert die Radarmessung einwandfreie Ergebnisse, weil die Tunnels und Bahnhöfe weitgehend schnee- und eisfrei sind.

Vorteilhafte Weiterbildungen und Ausgestaltungen des erfindungsgemäßen Verfahrens bzw. der Einrichtung zur Durchführung des Verfahrens sind in den Unteransprüchen angegeben.

Die Erfindung ist nachstehen anhand eines in der Zeichnung dargestellten Ausführungsbeispiels näher erläutert.

Die Zeichnung zeigt in
- Figur 1: schematisch eine Strecke, auf der spurgeführte Fahrzeuge ihre jeweiligen Fahrorte bedarfsweise durch Satellitenortung oder Radarortung feststellen und in
- Figur 2: eines schematische Darstellung der fahrzeugseitigen Ortungseinrichtung.

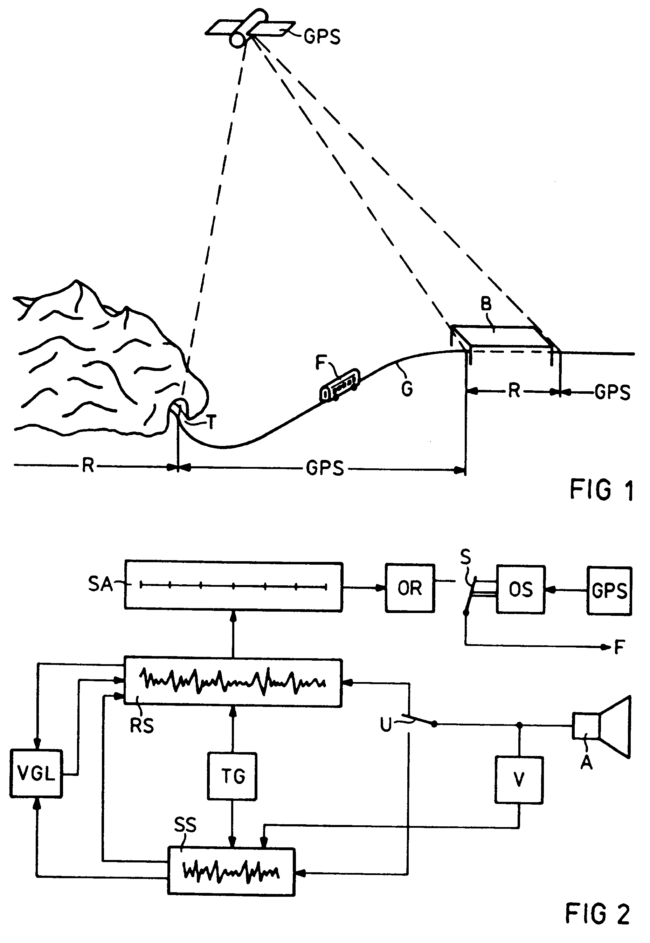

In Figur 1 befährt ein Fahrzeug F ein Gleis G, das u. a. durch einen Tunnel T und einen Bahnhof B geführt ist. Die Gleisführung ist beliebig; es kann sich um das Gleis einer eingleisigen oder ein Gleis einer zweigleisigen Strecke handeln, und das Gleis kann sich auch beliebig verzweigen. Das Fahrzeug F kann ein Einzelfahrzeug sein oder aber das Triebfahrzeug eines aus mehreren Einzelfahrzeugen gebildeten Fahrzeugverbandes. Auf freier Strecke außerhalb des Tunnels T und des Bahnhofes B geschieht die Eigenortung des Fahrzeuges in an sich bekannter Weise durch Satellitennavigation. Die Bereiche, in denen Satellitennavigation zur Anwendung kommt, sind in der Zeichnung durch die Buchstabenkombination GPS = Global Positioning System gekennzeichnet. Dort wo die Satellitennavigation nicht zur Anwendung kommt, also im Tunnel und im Bahnhof, geschieht die Eigenortung des Fahrzeugs F durch Korrelation von Radarsignalabbildungen des Gleisbettes. Hierzu leuchtet das Fahrzeug F einen schmalen Bereich des Gleisbettes vorzugsweise zwischen den Fahrschienen aus und detektiert die vom Gleisbett reflektierten Signale. Es korreliert dann diese Signale mit Referenzsignalen, die bei einer früheren Fahrt vom Fahrzeug ermittelt wurden und in einem Speicher abgelegt sind. Den Referenzsignalen sind in einem Streckenatlas abgespeicherte absolute Ortsangaben zugeordnet, die bei Korrelation der beiden Radarsignale abgefragt werden und den augenblicklichen Fahrort des Fahrzeugs bezeichnen. Die Radarsignalabbildungen des Gleisbettes liegen mindestens für alle die Streckenabschnitte vor, in denen die Satellitennavigation wegen Abschaltung nicht zum Tragen kommt. Sie können darüber hinaus bei geeigneter Datenkompression auch für ausgewählte Streckenpunkte wie z. B. Weichen erfaßt und bearbeitet werden, was den Vorteil hätte, daß auch bei Abschaltung der Satellitennavigation noch eine Ortung, wenn auch möglicherweise nur in einem Grobraster, möglich wäre.

In Figur 2 ist schematisch die fahrzeugseitige Ortungseinrichtung dargestellt. Über die Antenne A eines das Gleisbett oder ein Teil des Gleisbettes ausleuchtenden Radargerätes wird bei einer ersten Testfahrt für die gesamte Strecke oder i für ausgewählte Streckenabschnitte/Streckenpunkte eine Gleisbettabbildung erstellt und in einem Referenzspeicher RS in digitalisierter Form abgespeichert. Dem Referenzspeicher RS ist ein Streckenatlas SA zugeordnet, in dem absolute Ortsangaben der Strecke z. B. in Form der Streckenkilometrierung hinterlegt sind. Referenzspeicher und Streckenatlas werden von einem Taktgeber TG synchron fortgeschaltet. Das synchrone Fortschalten des Streckenatlas und des Referenzspeichers ermöglicht eine eindeutige Zuordnung der im Referenzspeicher RS gespeicherten Abbildungssignale zu einzelnen Ortspositionen der Strecke. Die im Referenzspeicher abgelegte Streckenabbildung dient als Vergleichsmuster für bei späteren Fahrten ermittelte Streckenabbildungen. Die bei einer Folgefahrt von der Radarantenne A aufgenommenen Radarsignale werden über den dann gewechselten Umschalter U dem Eingang eines Strecken) speichers SS zugeführt und dort abgespeichert. Die Abspeicherung kann wie auch die Abspeicherung der Referenzstreckenabbildung vorteilhafterweise in komprimierter Form erfolgen. In diesem Fall erfolgt die weitere Verarbeitung der im Referenzspeicher RS und der im Streckenspeicher SS gespeicherten Daten jeweils nach Datendekompressionen und dadurch bedingter Rückgewinnung der von der Radarantenne den beiden Speichern zugeführten ursprünglichen Daten.

Die im Referenzspeicher und die im Streckenspeicher gespeicherten Streckenabbildungen werden zum Feststellen des tatsächlich von einem Fahrzeug befahrenen Fahrortes korreliert. Dieser Vorgang wird in Figur 2 durch einen Vergleicher VGL versinnbildlicht. Der Vergleicher erkennt unter Berücksichtigung zulässiger Toleranzen Übereinstimmung zwischen den aktuellen Streckendaten und den entsprechenden Streckendaten des Referenzspeichers RS. Ist durch den Korrelationsvorgang eine solche Datenübereinstimmung zwischen den aktuellen und den im Referenzspeicher abgelegten Daten gefunden, so können die aktuellen Abbildungsdaten den im Streckenatlas SA hinterlegten Ortsangaben direkt zugeordnet werden. Damit weiß das Fahrzeug um den tatsächlich von ihm befahrenen Fahrort und kann ihn zur eigenen Fahrzeugsteuerung heranziehen und/oder anderen Fahrzeugen, Streckeneinrichtungen oder einer Leit- und Steuerstelle mitteilen. Die Genauigkeit der Ortung ist um so größer, je größer die Auflösung der Streckendaten im Referenzund Streckenspeicher sowie im Streckenatlas ist.

Durch Bewertung der von einer Geschwindigkeitsmeßeinrichtung V festgestellten Vorrückgeschwindigkeit des Fahrzeugs wird dafür gesorgt, daß der Darstellungsmaßstab der Abbildungssignale beider Speicher während des Vergleichsvorganges jeweils der gleiche ist. Als Geschwindigkeitsmeßeinrichtung V kann dabei in vorteilhafter Weise das zur Gewinnung der Streckenabbildung verwendete Radargerät verwendet sein.

Die Sicherheit des Ortungsergebnisse ist im wesentlichen von der Menge der zu vergleichenden Daten und der Toleranz bestimmt, die beim Datenvergleich zugelassen wird. Um eine hohe Ortungssicherheit zu gewährleisten, ist es vorteilhaft, in den Korrelationsvorgang zwischen den Gleisbettabbildungen des Streckenspeichers und des Referenzspeichers nicht nur die Gleisbettabbildung des aktuellen Fahrortes einzubeziehen, sondern auch für zurückliegende Fahrorte geltende Gleisbettabbildungen, d. h. den Korrelationsvorgang auf einen längeren Streckenabschnitt auszudehnen. Je größer der korrelierte Streckenbereich ist, um so sicherer ist das jeweils festgestellte Ortungsergebnis. Insbesondere beim Wechsel von der GPS-Ortung auf die Radarortung ist es von Vorteil, die Radarortungsergebnisse einer Plausibilitätsprüfung zu unterziehen, bei der festgestellt wird, ob die Radarortungsergebnisse mit den zuvor ermittelten GPS-Ortungsergebnissen harmonieren.

Solange die Satellitennavigation des Global Positioning Systems GPS einwandfreie Ortungsergebnisse liefert, führt dieses dem Fahrzeug F entsprechende Ortungsergebnisse OS zu. Sobald keine oder keine sinnvollen Ortungsergebnisse erzielt werden, schaltet die fahrzeugseitige Ortungseinrichtung um auf Radarortung; der Umschaltvorgang wird in Figur 2 verdeutlicht durch einen Schalter S, der bei Ausfall der Satellitennavigation umgesteuert wird. Dieser Schalter S führt dem Fahrzeug F dann die Ortungsergebnisse OR der Radarortung zu und setzt das Fahrzeug damit in die Lage, seinen jeweiligen Fahrort auch bei Abschattung der für die Satellitennavigation vorgesehenen Satelliten weiterzuführen. Dabei kann in bekannter Weise vor dem Umschalten auf die Radarortung zunächst der Versuch unternommen werden, die Satellitennavigation durch Nutzung anderer als die bisher für die Ortung verwendeter Satelliten fortzuführen.

Um eine möglichst große Übereinstimmung zwischen den Strekkenabbildungen des Streckenspeicher und des Referenzspeichers herbeizuführen, kann es von Vorteil sein, die im Referenzspeicher gespeicherten Streckendaten jeweils nach Korrelation mit den entsprechenden aktuellen Daten des Streckenspeichers durch diese aktuellen Daten zu ersetzen. Auf diese Weise wird die Streckenabbildung im Referenzspeicher ständig aktualisiert, so daß Einflüsse durch Langzeitveränderungen der zu korrelierenden Streckenabbildungen weitgehend vermieden werden.

## Patentansprüche

1. Verfahren zur Eigenortung eines spurgeführten Fahrzeugs auf einer Strecke unter Verwendung einer auf dem Fahrzeug vorhandenen mit Bezug zur Streckenkilometrierung abgelegten Referenz-Streckenabbildung und einer beim Befahren der Strekke nach den gleichen Gesetzmäßigkeiten wie die Referenz-Streckenabbildung ermittelten aktuellen Streckenabbildung, die auf die Referenz-Streckenabbildung zu korrelieren ist,
**dadurch gekennzeichnet**,
daß für die Eigenortung des Fahrzeugs Satellitennavigation zur Anwendung kommt, die bei Ausfall für die Dauer des Ausfalls durch Korrelation von Radarsignalabbildungen des Gleisbettes ersetzt wird, die von einer Referenzfahrt und der aktuellen Fahrt stammen.

2. Verfahren nach Anspruch 1,
**dadurch gekennzeichnet**,
daß die aktuelle Gleisbettabbildung nach Maßgabe der aktuellen Geschwindigkeit des Fahrzeugs linearisiert wird.

3. Einrichtung zur Durchführung des Verfahrens nach Anspruch 1 oder 2,
**dadurch gekennzeichnet**,
daß auf dem Fahrzeug zusätzlich zu einer ersten, auf Satellitennavigation beruhenden Ortungseinrichtung eine zweite, auf der Korrelation einer Referenz-Radarabbildung des Gleisbettes mit einer aktuellen Radarabbildung des Gleisbettes beruhende Ortungseinrichtung vorgesehen ist, von denen diejenige, die Ortungsergebnisse mit aktuell höherer Genauigkeit als die andere liefert, die Ortungsergebnisse zur Verarbeitung bereitstellt.

4. Einrichtung nach Anspruch 3,
**dadurch gekennzeichnet,**
daß auf dem Fahrzeug zum Ablegen der Daten für eine Referenz-Gleisbettabbildung und für die aktuelle Gleisbettabbildung Speicher (RS, SS) vorgesehen sind, aus denen die Daten zur Korrelation entnehmbar sind.

5. Einrichtung nach Anspruch 4,
**dadurch gekennzeichnet,**
daß die die Referenz-Gleisbettabbildung darstellenden Daten der zweiten Ortungsrichtung in einer definierten Abtastzahl pro Streckeneinheit in einem Streckenatlas (SA) abgespeicherten absoluten oder relativen Ortsangaben sowie ggf. weiteren Daten über die Strecke zugeordnet sind und das die die aktuelle Gleisbettabbildung darstellenden Daten über die aktuelle Vorrückgeschwindigkeit des Fahrzeugs linearisiert dem Vergleichsvorgang in gleich definierter Abtastzahl pro Streckeneinheit zugeführt sind.

6. Einrichtung nach Anspruch 5,
**dadurch gekennzeichnet**,
daß die aktuelle Vorrückgeschwindigkeit des Fahrzeugs durch Radarmessung über Boden zu ermitteln ist.

7. Einrichtung nach Anspruch 5 oder 6,
**dadurch gekennzeichnet,**
daß die Genauigkeit der Ortungsergebnisse durch Vorgabe verschiedenhoher Abtastraten pro Streckeneinheit sowohl für die Darstellung der Referenz-Gleisbettabbildung als auch der aktuellen Gleisbettabbildung veränderbar ist.

8. Einrichtung nach Anspruch 5 oder 6,
**dadurch gekennzeichnet,**
daß die Sicherheit des Ortungsergebnisses durch Vorgabe unterschiedlichlanger Korrelationsbereiche sowie unterschiedlicher Toleranzen der zu korrelierenden Daten.

9. Einrichtung nach einem der Ansprüche 3 bis 8,
**dadurch gekennzeichnet,**
daß die Anerkennung einer durch Korrelation mindestens einer Referenzgleisbettabbildung und der aktuellen Gleisbettabbildung ermittelten Ortungsangabe auf dem Fahrzeug davon abhängig gemacht ist, daß vorangegangene Ortungsvorgänge zu Ortungsergebnissen geführt haben, die mit der aktuell ermittelten Ortungsangabe harmonieren.

10. Einrichtung nach einem der Ansprüche 3 bis 9,
**dadurch gekennzeichnet**,
daß die Daten der aktuellen Gleisbettabbildung jeweils frühestens nach Korrelation der aktuellen Gleisbettabbildung mit der Referenz-Gleisbettabbildung die für die Referenz-Gleisbettabbildung gespeicherten Daten ersetzen und fortan die Daten der Referenz-Gleisbettabbildung darstellen.

11. Einrichtung nach einem der Ansprüche 3 bis 10,
**dadurch gekennzeichnet,**
daß die die Referenz-Gleisbettabbildung und die die aktuelle Gleisbettabbildung darstellenden Daten vor Abspeicherung einer Datenkompression und vor Korrelation einer Datendekompression unterzogen sind.

## Claims

1. Method for the self-locating of a railborne vehicle on a railway line with the use of a reference railway line image present on the vehicle and deposited with respect to the railway line kilometrage and with the use of a current railway line image determined according to the same laws as the reference railway line image when the railway line is travelled on, which current railway line image is to be correlated with the reference railway line image, characterized in that for the self-locating of the vehicle satellite navigation is used which, in the event of failure, is replaced for the duration of the failure by correlation of radar signal images of the track bed which originate from a reference journey and the current journey.

2. Method according to claim 1, characterized in that the current track bed image is linearized in accordance with the current speed of the vehicle.

3. Device for carrying out the method according to claim 1 or 2, characterized in that in addition to a first locating device based on satellite navigation there is provided on the vehicle a second locating device based on the correlation of a reference radar image of the track bed with a current radar image of the track bed, whereby the device which supplies locating results with currently greater accuracy than the other device provides the locating results for processing.

4. Device according to claim 3, characterized in that memories (RS, SS) are provided on the vehicle for depositing the data for a reference track bed image and for the current track bed image, from which memories the data can be taken for correlation.

5. Device according to claim 4, characterized in that the data of the second locating direction which represents the reference track bed image is allocated in a defined sample number per railway line unit to absolute or relative location information stored in a railway line atlas (SA) and optionally to further data on the railway line, and in that the data on the current advance speed of the vehicle which represents the current track bed image is supplied linearized to the comparison procedure in a similarly defined sample number per railway line unit.

6. Device according to claim 5, characterized in that the current advance speed of the vehicle is to be determined by radar measurement above ground.

7. Device according to claim 5 or 6, characterized in that the accuracy of the locating results is variable by way of the specification of different scanning rates per railway line unit both for the representation of the reference track bed image and the current track bed image.

8. Device according to claim 5 or 6, characterized in that the reliability of the locating result [...] by way of the specification of correlation regions of different lengths and of different tolerances of the data to be correlated.

9. Device according to one of claims 3 to 8, characterized in that the recognition of a locating statement determined by correlation of at least one reference track bed image and the current track bed image on the vehicle is made dependent on the fact that previous locating procedures have led to locating results which harmonize with the currently determined locating statement.

10. Device according to one of claims 3 to 9, characterized in that the data of the current track bed image, in each case at the earliest after correlation of the current track bed image with the reference track bed image, replaces the data stored for the reference track bed image and from then on represents the data of the reference track bed image.

11. Device according to one of claims 3 to 10, characterized in that the data representing the reference track bed image and the data representing the current track bed image is subjected before storing to data compression and before correlation to data decompression.

## Revendications

1. Procédé d'autolocalisation d'un véhicule guidé sur rails sur une voie en utilisant une image de voie de référence, qui est présente sur le véhicule et qui est mémorisée avec une référence au kilométrage de voie, et une image de voie actuelle, qui est déterminée lors du parcours de la voie selon les mêmes règles que l'image de voie de référence et qui est à corréler avec l'image de voie de référence,
caractérisé par le fait que,
pour l'autolocalisation du véhicule, on utilise une navigation par satellite qui, en cas de défaillance et pour la durée de la défaillance, est remplacée par une corrélation d'images de signal radar du ballast qui proviennent d'un parcours de référence et du parcours actuel.

2. Procédé selon la revendication 1,
caractérisé par le fait que
l'on linéarise l'image de ballast actuelle selon la vitesse actuelle du véhicule.

3. Dispositif pour la mise en oeuvre du procédé selon la revendication 1 ou 2,
caractérisé par le fait que
il est prévu sur le véhicule en plus d'un premier dispositif de localisation reposant sur une navigation par satellite un deuxième dispositif de localisation reposant sur la corrélation d'une image radar de référence du ballast avec une image radar actuelle du ballast, celui des deux dispositifs de localisation qui fournit des résultats de localisation avec une précision actuellement plus grande que l'autre mettant alors à disposition ses résultats de localisation pour le traitement.

4. Dispositif selon la revendication 3,
caractérisé par le fait que
il est prévu sur le véhicule, pour mémoriser les données pour une image de ballast de référence et pour une image de ballast actuelle, des mémoires (RS, SS) dans lesquelles les données peuvent être prises pour la corrélation.

5. Dispositif selon la revendication 4,
caractérisé par le fait que
les données, représentant l'image de ballast de référence, du deuxième dispositif de localisation sont associées, en un nombre défini d'échantillonnages par unité de voie, à des indications de position absolues ou relatives mémorisées dans un atlas de voies (SA) et éventuellement à d'autres données concernant la voie et que les données représentant l'image de ballast actuelle sont envoyées, linéarisées selon la vitesse d'avance actuelle du véhicule, en un même nombre défini d'échantillonnages par unité de voie, à l'opération de comparaison.

6. Dispositif selon la revendication 5,
caractérisé par le fait que
la vitesse d'avance actuelle du véhicule est à déterminer par une mesure radar par l'intermédiaire du sol.

7. Dispositif selon la revendication 5 ou 6,
caractérisé par le fait que
la précision des résultats de localisation peut être modifiée en prescrivant différentes valeurs de taux d'échantillonnage par unité de voie, aussi bien pour la représentation de l'image de ballast de référence que pour celle de l'image de ballast actuelle.

8. Dispositif selon la revendication 5 ou 6,
caractérisé par le fait que
la fiabilité du résultat de localisation peut être modifiée en prescrivant différentes longueurs de domaines de corrélation et différentes marges de tolérance des données à corréler.

9. Dispositif selon l'une des revendications 3 à 8,
caractérisé par le fait que
l'acceptation d'une indication de position, déterminée par la corrélation d'au moins une image de ballast de référence et de l'image de ballast actuelle, sur le véhicule est rendue dépendante du fait que des opérations de localisation antérieures ont conduit à des résultats de localisation qui sont en harmonie avec l'indication de position déterminée actuellement.

10. Dispositif selon l'une des revendications 3 à 9,
caractérisé par le fait que
les données de l'image de ballast actuelle remplacent à chaque fois, au plus tôt après la corrélation de l'image de ballast actuelle avec l'image de ballast de référence, les données mémorisées pour l'image de ballast de référence et représentent ensuite les données de l'image de ballast de référence.

11. Dispositif selon l'une des revendications 3 à 10,
caractérisé par le fait que
les données représentant l'image de ballast de référence et les données représentant l'image de ballast actuelle sont soumises à une compression de données avant leur mémorisation et à une décompression de données avant leur corrélation.
